# EUROPÄISCHE PATENTSCHRIFT

(11) **EP 2 593 822 B1**
(45) Veröffentlichungstag und Bekanntmachung des Hinweises auf die Patenterteilung: **27.12.2017**
(21) Anmeldenummer: 11745689.7
(22) Anmeldetag: 15.07.2011
(51) Int. Cl.: G02B 6/34, G02B 27/10

(54) **STRAHLVEREINIGUNGS- UND ABLENKUNGSVORRICHTUNG**
BEAM COMBINING AND DEFLECTING DEVICE
DISPOSITIF DE CONCENTRATION ET DE DÉFLEXION DE FAISCEAU

(30) Priorität: 29.10.2010 DE 102010049771; 16.07.2010 DE 102010027540
(43) Veröffentlichungstag der Anmeldung: 22.05.2013
(73) Patentinhaber: TOPTICA Photonics AG, 82166 Gräfelfing (DE)
(72) Erfinder: SCHNEIDER, Marco, 82061 Neuried (DE)
(74) Vertreter: Isfort, Olaf
(86) Internationale Anmeldenummer: PCT/EP2011/003544
(87) Internationale Veröffentlichungsnummer: WO 2012/007174

(56) Entgegenhaltungen:
- EP-A2- 1 176 741
- WO-A1-93/22765
- WO-A2-01/29833
- DE-A1-102004 015 638
- DE-A1-102010 031 674
- US-A1- 2003 147 142
- US-A1- 2004 057 656
- US-A1- 2011 134 949

## Beschreibung

Die Erfindung betrifft eine Strahlvereinigungsvorrichtung mit mehreren separaten Eingangsstrahlwegen und wenigstens einem Ausgangsstrahlweg zur Vereinigung mehrerer Eingangsstrahlen zu wenigstens einem Ausgangsstrahl.

Vorrichtungen dieser Art werden benötigt, um beispielsweise die Strahlen mehrerer Laser mit jeweils unterschiedlichem Spektrum zu einem einzelnen Strahl zu vereinigen, d.h. zu überlagern. Hierzu werden bisher aufwendige optische Aufbauten benutzt, welche eine Vielzahl optischer und mechanischer Elemente, wie z.B. kippbare Umlenkspiegel, beinhalten. Sollen die zu vereinigenden Laserstrahlen und auch der vereinigte Ausgangsstrahl in optischen Fasern propagieren, sind des Weiteren Faseroptiken oder Faserkoppler notwendig, die zum einen den Justageaufwand beträchtlich erhöhen und zum anderen nicht unerhebliche Strahlungsverluste verursachen.

Die gezielte Ablenkung von Freistrahlen erfolgt im Stand der Technik durch Umlenkspiegel, welche mit Hilfe von Schrittmotoren verstellbar sind. Um eine Verstellung in drei Dimensionen zu erlauben, sind großvolumige, komplexe und vergleichsweise teure Vorrichtungen notwendig.

Die WO 01/29833 A2 beschreibt ein digitales Laser-Bildaufzeichnungsgerät. Dieses umfasst eine Strahlvereinigungsvorrichtung mit mehreren separaten Eingangsstrahlwegen, wobei jedem Eingangsstrahlweg zwei Risley-Prismenpaare zugeordnet sind.

Die WO 93/22765 A1 beschreibt ein optisches Bandaufzeichnungsgerät, in dem zur Lichtstrahl-Ablenkung Risley-Prismen zum Einsatz kommen.

Die DE 10 2004 015 638 A1 beschreibt eine Vorrichtung mit einem Bildaufnahmeelement, das mittels eines kompakten Ultraschallmotors drehbar ist.

Aus der EP 1 176 741 A2 ist ein optisches Kommunikationsgerät bekannt, bei dem verschiedene optische Komponenten mittels piezo-elektrischer Aktuatoren bewegbar sind. Bei den piezo-elektrischen Aktuatoren kann es sich um piezo-elektrische Drehmotoren handeln, die als Vibrationsantriebe ausgelegt sind.

Ein weiterer piezo-elektrischer Antrieb zur Verstellung von Risley-Prismen ist aus US 2004/057656 A1 bekannt.

Es ist Aufgabe der Erfindung, eine kompakte und kostengünstige Strahlvereinigungsvorrichtung zu schaffen, welche zuverlässig für eine präzise und stabile Überlagerung der Eingangsstrahlen im Ausgangsstrahl sorgt.

Zur Lösung dieser Aufgabe schlägt die Erfindung eine Strahlvereinigungsvorrichtung nach Patentanspruch 1 vor.

Risley-Prismenpaare bestehen aus zwei Risley-Prismen, welche bei Verdrehung gegeneinander eine Ablenkung des transmittierten Strahles bewirken. Die Strahllenkungseigenschaft der Risley-Prismenpaare wird bisher z.B. für optische Schalter (Switches) oder eine gerichtete Lichtabstrahlung genutzt.

US 2003/0138193 A1 offenbart einen optischen Schalter mit Risley-Prismen, bei welchem sich Arrays von Eingangs- und Ausgangsfasern gegenüberstehen, wobei jeder Eingangs- und Ausgangsfaser jeweils ein Risley-Prismenpaar zugeordnet ist, mit welchem Licht von einer Eingangsfaser auf eine bestimmte Ausgangsfaser geschaltet werden kann.

US 2009/0323203 A1 offenbart eine Vorrichtung zur optischen Strahllenkung, bei welcher ein Risley-Prismenpaar einen Laserstrahl in eine gewünschte Richtung lenkt. Eine Anordnung mehrerer solcher Vorrichtungen ermöglicht beispielsweise eine parallele Abstrahlung mehrerer Laserstrahlen in eine wählbare Richtung.

Die Erfindung nutzt die Risley-Prismenpaare so, dass ein von der Lichtquelle, z.B. einem Laser, ausgehender Strahl hintereinander auf ein oder mehrere Risley-Prismenpaare trifft, welche ihn gezielt auf eine Umlenkeinrichtung zur Einkopplung in einen Ausgangsstrahlweg lenken, und zwar so, dass die verschiedenen Eingangsstrahlen im jeweiligen Ausgangsstrahl präzise räumlich überlappen und gemeinsam propagieren.

Bei Verwendung von mehr als einem Risley-Prismenpaar kann die gewünschte Ablenkung verstärkt werden oder eine größere Fehllage des Strahls besser ausgeglichen werden. Insbesondere kann ein Parallelversatz des betreffenden Eingangsstrahls flexibel kompensiert werden.

Der Eingangsstrahlweg kann neben dem Risley-Prismenpaar weitere optische Elemente enthalten. Je nach der Strahlquelle oder dem Transportmedium des Eingangsstrahls, z.B. einer Laserdiode oder einer optischen Faser, kann es vorteilhaft sein, zusätzliche optische Elemente wie z.B. Filter, Kollimatoren, Linsen oder Blenden in den Eingangsstrahlweg einzubringen.

Die Erfindung sieht vor, dass die von den Risley-Prismenpaaren abgelenkten Eingangsstrahlen mittels zusätzlicher, verstellbarer oder nicht verstellbarer Umlenkeinrichtungen, insbesondere mittels Umlenkspiegeln, auf den Ausgangsstrahlweg richtbar sind.

Bevorzugt sind die Umlenkeinrichtungen mit einer konstanten Ausrichtung im Strahlengang angeordnet. Sie haben lediglich die Funktion, den bereits durch die Risley-Prismenpaare optimal justierten Eingangsstrahl auf den Ausgangsstrahlweg umzulenken und so für eine Überlagerung der Eingangsstrahlen im Ausgangsstrahl zu sorgen. Eine Justage der Umlenkeinrichtungen ist bei dieser Ausgestaltung nicht vorgesehen. Als Umlenkeinrichtung kommen unterschiedliche Elemente in Frage, besonders eignen sich teilreflektierende Spiegel. Zur Überlagerung der Eingangsstrahlen eignen sich aber auch dispersive Elemente, wie z.B. Prismen.

Denkbar, jedoch aufgrund der Komplexität und damit der Kosten des Aufbaus weniger vorteilhaft, ist auch eine Lösung, bei der pro Eingangsstrahlweg ein Risley-Prismenpaar mit einem verstellbaren Umlenkspiegel kombiniert ist, um die gewünschte Ausrichtung des Eingangsstrahls auf den Ausgangsstrahlweg zu erzielen.

Gemäß der Erfindung weist der Ausgangsstrahlweg ein Strahllagenmesssystem auf, vorzugsweise in Verbindung mit einem positionssensitiven Detektor (PSD) oder einer Kamera. Dabei wird im Ausgangsstrahlweg beispielsweise ein Strahlteiler positioniert, der einen kleinen Teil des vereinigten Strahles aus dem Hauptstrahlweg auskoppelt und auf den Detektor lenkt. Der Detektor misst die Form und Position des Strahles, so dass der Anwender eine Aussage über das Ergebnis der Justage der Risley-Prismenpaare erhält. Sofern der Detektor eine Abweichung von der gewünschten Strahlform und/oder Strahlposition erkennt, kann der Anwender eine Justage vornehmen. Da jedem einzelnen Eingangsstrahl ein eigener Eingangsstrahlweg mit einem oder mehreren Risley-Prismenpaaren zugeordnet ist, kann jeder Strahl auch so abgelenkt werden, dass der Detektor des Strahllagenmesssystems unterschiedliche Strahllagen detektiert. So wäre es z.B. auch denkbar, zwei Ausgangsstrahlwege zu schaffen, welche auf dem Detektor als zwei Maxima erscheinen. Die gewünschte Strahllage kann über das Messsystem festgelegt und mittels der Risley-Prismenpaare in den Eingangsstrahlwegen nachjustiert werden. Die Positionierung des Detektors empfiehlt sich im Ausgangsstrahlweg dort, wo bereits alle Eingangsstrahlen überlagert wurden. Es ist jedoch auch möglich, für Teilaussagen zu der Justage einzelner Eingangsstrahlwege Detektoren hinter einzelnen Umlenkeinrichtungen, welche in Strahlrichtung vorn im Ausgangsstrahlweg angeordnet sind, vorzusehen.

Besonders vorteilhaft ist, dass gemäß der Erfindung die Risley-Prismenpaare motorisch bewegbar sind und die Orientierung der Risley-Prismenpaare abhängig von der mittels des Strahllagenmesssystems gemessenen Ist-Strahlüberlagerung im Ausgangsstrahlweg und der angestrebten Soll-Strahlüberlagerung steuerbar ist. Weiter empfiehlt sich dabei, dass die Risley-Prismenpaare computergesteuert bewegbar sind. Somit kann die Justage gänzlich automatisiert geregelt erfolgen, so dass der Anwender nicht mehr manuell tätig werden muss. Er gibt lediglich dem Strahllagenmesssystem die gewünschten Parameter der Strahlposition vor. Über einen Algorithmus steuert das Messsystem die Motoren der Risley-Prismenpaare dann solange bis die tatsächliche Ist-Strahlüberlagerung mit der gewünschten Soll-Strahlüberlagerung übereinstimmt.

An Stelle des Strahllagenmesssystems kann, in einer besonders einfachen Ausgestaltung der erfindungsgemäßen Strahlvereinigungsvorrichtung, ein Leistungsmesssystem Verwendung finden, das die Lichtleistung im Ausgangsstrahl misst. Ein geeigneter Algorithmus kann in diesem Fall dazu genutzt werden, die Motoren der Risley-Prismenpaare in der Weise zu steuern, dass die gemessene Ausgangsleistung einen Soll- oder Maximalwert annimmt.

Mit Vorteil sind die Risley-Prismenpaare der Eingangsstrahlwege voneinander unabhängig bewegbar. So können die einzelnen Eingangsstrahlen, wie zuvor bereits erwähnt, unabhängig voneinander manipuliert werden. Die Fehllage jedes Eingangsstrahls kann individuell kompensiert werden.

Bevorzugt ist die Strahlvereinigungsvorrichtung so ausgebildet, dass die Eingangsstrahlen mit Hilfe von optischen Fasern in die Eingangsstrahlwege einkoppelbar sind. Ebenso ist der in dem Ausgangsstrahlweg propagierende Ausgangsstrahl bevorzugt in eine optische Faser einkoppelbar.

Gemäß der Erfindung sind die Risley-Prismenpaare mittels besonders kostengünstiger vibrierender Piezoaktuatoren verstellbar. Durch die Piezovibration werden die Prismen der Risley-Prismenpaare, anders als beispielsweise bei Verwendung von Schrittmotoren, nach einem mehr oder weniger zufälligen Schema rotiert. Die gewünschte Strahllage wird eingestellt, indem die Vibration in Abhängigkeit von der gemessenen Strahllage gestartet oder unterbrochen wird, und zwar so lange bis der Soll-Zustand erreicht ist.

Schließlich ist vorgesehen, dass die Strahlvereinigungsvorrichtung in einem Gehäuse angeordnet ist, welches eingangsseitig Faserstecker für die Kopplung von optischen Fasern mit den Eingangsstrahlwegen und ausgangsseitig einen oder mehrere Faserstecker für die Kopplung des Ausgangsstrahlweges mit einer oder mehreren optischen Fasern aufweist. Der Anwender muss in diesem Fall lediglich die zu überlagernden Strahlungsquellen durch eine optische Faser mit dem Faserstecker des Gehäuses verbinden und auf der Ausgangsseite des Gehäuses ebenfalls eine optische Faser auf den Stecker aufstecken. Auf der Ausgangsseite des Gehäuses können statt einer Ausgangsfaser auch mehrere Ausgangsfasern vorgesehen sein, so dass der vereinigte Ausgangsstrahl auf mehrere Empfängerfasern verteilt wird. Ebenso kann der Ausgangsstrahl das Gehäuse als Freistrahl verlassen.

Die Risley-Prismenpaare umfassen jeweils zwei im Lichtstrahlverlauf hintereinander angeordnete Prismen, wobei wenigstens eines der beiden Prismen um eine Drehachse drehbar gelagert ist, wobei einelektromotorischer Antrieb eine Drehbewegung des wenigstens einen Prismas bewirkt.

Es ist, wie oben erwähnt, an sich bekannt, ein Risley-Prismenpaar zur Ablenkung von Lichtstrahlen zu verwenden. Das Risley-Prismenpaar besteht dabei aus zwei im Lichtstrahlverlauf hintereinander angeordneten Prismen, welche einzeln oder auch gemeinsam um eine gemeinsame Drehachse verdreht werden können. Werden die beiden Prismen gegeneinander verdreht, ändert sich der Betrag des Winkels der Strahlablenkung relativ zur parallel zur Drehachse verlaufenden optischen Achse. Werden beide Prismen gemeinsam rotiert, ändert sich die Richtung der Strahlablenkung (der Azimut). Risley-Prismenpaare bieten sich daher überall dort an, wo ein Lichtstrahl steuerbar ablenkbar sein soll, um diesen beispielsweise in eine optische Faser einzukoppeln.

Die Druckschrift WO 01/57568 A1 beschreibt einen optischen M x N-Schalter, bei welchem jeweils ein Signal von einer Eingangsfaser eines Faserarrays auf eine Ausgangsfaser eines Faserarrays übertragen wird. Ein zwischen den Faserarrays angeordnetes Risley-Prismenpaar wird computergesteuert so rotiert, dass das Licht auf die gewünschte Ausgangsfaser gelenkt wird. Zur Rotation der beiden Risley-Prismen werden Schrittmotoren verwendet, welche die beiden Prismen des Risley-Prismenpaares über einen Mikroprozessor so steuern, dass sie sich mit einer festen Schrittweite der gewünschten Position annähern.

Die feste Schrittweite des bekannten Schrittmotorantriebs hat den Nachteil, dass nicht jeder beliebige Ablenkungswinkel angefahren werden kann. Weiterhin ergibt sich der Nachteil, dass die feste Schrittweite des Schrittmotorantriebs zwar durch Getriebe verringert werden kann, um die Winkelauflösung zu vergrößern. Ein hinreichend präzises mechanisches Getriebe ist aber sehr aufwendig und weist eine erhebliche Baugröße auf.

Die Erfindung schlägt einen piezo-elektrischen Vibrationsantrieb als Antrieb zur Drehung des Prismas vor, der einen mechanischen Resonator und ein daran gekoppeltes piezo-elektrisches Element aufweist, wobei der Resonator an einem mit dem wenigstens einen drehbar gelagerten Prisma drehfest verbundenen Reibrad anliegt.

Das piezo-elektrische Element (z.B. bestehend aus piezo-aktiver Dünnschichtkeramik) des piezo-elektrischen Vibrationsantriebes führt beim Anlegen einer geeigneten elektrischen Wechselspannung mechanische Schwingungen aus und gibt diese an den Resonator weiter, der dadurch zu Resonanzen angeregt wird. Der Resonator liegt an dem drehbar gelagerten Reibrad an. Der Resonator setzt die Schwingungen des piezo-elektrischen Elements in Schwingungen der Resonatorspitze, d. h. des Kontaktbereichs des Resonators mit dem Reibrad, um. Diese Schwingungen bewirken eine Drehung des Reibrades, an dem die Resonatorspitze anliegt.

Der piezo-elektrische Vibrationsantrieb führt erfindungsgemäß bei besonders niedrigem Energieverbrauch und besonders kostengünstiger Herstellung die gewünschte Drehung des Prismas äußerst exakt aus, und zwar mit quasianaloger Präzision bzgl. des einstellbaren Drehwinkels. Mit jeder Schwingung der Resonatorspitze wird das Reibrad um ein wenige µm betragendes Inkrement in Umfangsrichtung weiterbewegt, wobei die Größe des Inkrements nicht konstant ist, sondern statistisch leicht variiert. Aufgrund dessen kann im Prinzip jeder Drehwinkel - in Verbindung mit einer geeigneten Regelung - mit höchster Präzision angefahren werden, z.B. indem das Prisma so lange hin und her (in entgegengesetzten Drehrichtungen) gedreht wird, bis der gewünschte Winkel erreicht ist. Die hierzu benötigte Zeit ist für die meisten Anwendung nicht relevant. Absolut liegt diese im Millisekundenbereich, da der Antrieb ca. 80.000 - 100.000 Schritte pro Sekunde ausführen kann. Die Genauigkeit der erfindungsgemäßen Ablenkungsvorrichtung hängt somit nur vom benutzten Regelungssystem (mit zugehöriger Sensorik) und der zur Verfügung stehenden Ansteuerungszeit ab.

Der erfindungsgemäß verwendete Vibrationsantrieb erzeugt Drehmomente im Bereich von Millinewtonmetern, so dass auf ein Getriebe verzichtet werden kann. Dies verringert in Folge die notwendige Baugröße des Antriebes und erhöht dessen Präzision.

Dadurch, dass der Resonator an dem drehfest mit dem Prisma verbundenen Reibrad anliegt, ist eine Drehung des Reibrads fest und unmittelbar mit einer entsprechenden Drehung des Prismas gekoppelt. Ein weiterer Vorteil des erfindungsgemäßen Antriebs resultiert entsprechend daraus, dass der Resonator das Reibrad, an dem er anliegt, und damit das Prisma fest hält, wenn der Antrieb nicht aktiviert ist. Das Prisma wird also nach der einmal vorgenommenen Einstellung des Ablenkungswinkels automatisch spielfrei arretiert, nachdem der Vibrationsantrieb deaktiviert ist.

Vorteilhaft ist eine Ausgestaltung, bei der der Resonator eine Schwingung des piezo-elektrischen Elements verstärkt und in eine wenigstens zweidimensionale oszillatorische Bewegung des Anlagebereichs des Resonators an dem Reibrad umwandelt. Die mechanischen Schwingungsmoden des Resonators resultieren zum einen aus der Lage und Einspannung des piezo-elektrischen Elements in oder an dem Resonator, zum anderen aus der Form und Masse des Resonators. Für den Antrieb kommt es auf die Schwingungen des Anlagebereichs des Resonators an dem Reibrad, d.h. der Resonatorspitze an. Besonders vorteilhaft für die Antriebsfunktion ist dabei, wenn die Resonatorspitze, eine ellipsenförmige Bewegung, d.h. eine oszillatorische Bewegung in zwei Dimensionen ausführt.

Die Erfindung sieht vor, dass der Resonator vorzugsweise wenigstens zwei verschiedene Resonanzfrequenzen hat, wobei die Drehrichtung der Drehbewegung davon abhängt, bei welcher der wenigstens zwei verschiedenen Resonanzfrequenzen der Resonator angeregt wird. Die Bewegung der Resonatorspitze ist bei den verschiedenen Resonanzfrequenzen derart unterschiedlich, dass entgegengesetzte Drehrichtungen des Reibrades und damit des Prismas bewirkt werden.

Besonders vorteilhaft ist der Resonator mit einem Federelement verbunden, das den Resonator gegen das Reibrad presst. Durch das Federelement wird der Resonator mit einer nahezu konstanten Kraft gegen das Reibrad gepresst, um den Antrieb des Reibrads zu bewirken. Aufgrund der Federkraft können sich das Reibrad und damit das Prisma nicht selbsttätig verdrehen. Ein sog. Totgang (Backlash) existiert bei dem erfindungsgemäßen Antrieb somit nicht. Dies ist insbesondere daher wichtig, weil nur gelegentlich die Position des Prismas verändert werden soll, da der dauernde Betrieb des Antriebs das optische System insgesamt destabilisieren würde.

In einer bevorzugten Ausgestaltung ist das Federelement eine den Resonator gleichzeitig halternde Schenkelfeder. Hierdurch wird in besonders einfacher Weise zum einen eine Halterung und Lagerung des Resonators geschaffen, und zum anderen kann die Schenkelfeder an ihrem freien Ende äußerst leicht in einem Vorrichtungsgehäuse montiert werden.

Vorteilhaft kann das Reibrad mittels eines Wälzlagers drehbar gelagert sein, wobei das wenigstens eine Prisma im Bereich einer zentralen Durchgangsbohrung des Reibrades gehaltert ist. Diese Ausgestaltung ist besonders platzsparend, da das Prisma jeweils innerhalb der drehbaren Bauteile, nämlich innerhalb des Reibrades angeordnet werden kann. Ebenfalls lassen sich dadurch die Drehachse des Wälzlagers und die Drehachse des Prismas auf höchst einfache und präzise Art und Weise übereinander legen. Gleichzeitig kann das Prisma im Bereich der zentralen Durchgangsbohrung des Reibrades oder auch innerhalb einer drehbaren Welle, die das Reibrad mit der Lagerung verbindet, vor Staub und Schmutz geschützt werden.

Zur Verstellung beider Prismen des Risley-Prismenpaares empfiehlt es sich, dass beide Prismen des wenigstens einen Risley-Prismenpaares um eine gemeinsame Drehachse drehbar gelagert sind, wobei jedes der beiden Prismen mit einem Reibrad drehfest verbunden ist und wobei jedem der beiden Prismen ein piezo-elektrischer Vibrationsantrieb, jeweils mit einem an dem Reibrad anliegenden mechanischen Resonator und einem an den Resonator gekoppelten piezo-elektrischen Element, zugeordnet ist, so dass die beiden Prismen unabhängig voneinander drehbar sind. Durch die unabhängigen Antriebe der Prismen lässt sich somit sowohl eine gegenläufige Drehung der beiden Prismen erreichen, als auch eine gemeinsame Bewegung.

Ausführungsbeispiele der Erfindung werden im Folgenden anhand der Figuren näher erläutert. Es zeigen:
- Figur 1:: eine 3D-Ansicht einer erfindungsgemäßen Ablenkvorrichtung;
- Figur 2:: einen Schnitt der Ablenkvorrichtung in der Ebene der Drehachse eines Risley-Prismenpaares;
- Figur 3:: eine Explosionszeichnung einer Ablenkvorrichtung gemäß Figur 1;
- Figur 4:: eine Strahlvereinigungsvorrichtung mit einer Strahlablenkung durch Risley-Prismenpaare.

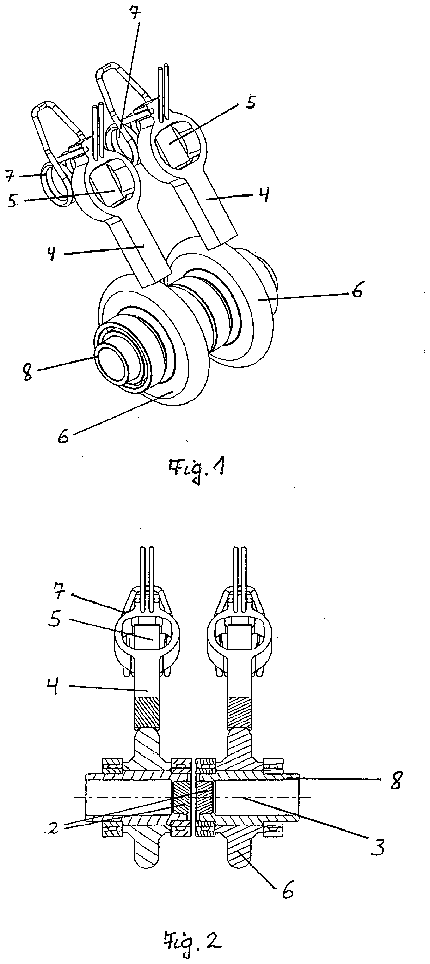

Die in den Figuren 1 bis 3 dargestellte Ablenkungsvorrichtung umfasst ein Risley-Prismenpaar, welches aus zwei Risley-Prismen 2 besteht. Die Risley-Prismen 2 sind zueinander so angeordnet, dass sie eine gemeinsame Drehachse 3 besitzen, die mit der optischen Achse zusammenfällt. Ein Resonator 4 mit einem daran gekoppelten piezo-elektrischen Element 5 wirkt auf ein drehfest mit dem Prisma 2 verbundenes Reibrad 6 ein. Der Resonator 4 ist über ein Federelement (Schenkelfeder) 7 gehaltert. Das Federelement presst die Spitze des Resonators 4 gegen das Reibrad 6. Das Reibrad 6 ist auf einer Hohlwelle 8, die mittels Wälzlagern (Kugellagern) gelagert ist, angeordnet. Die Prismen 2 befinden sich dabei in einer zentralen Durchgangsbohrung der Hohlwelle 8 bzw. im Bereich der zentralen Durchgangsbohrung des Reibrades 6 und sind somit drehfest mit dem Reibrad 6 verbunden. In der dargestellten Anordnung mit zwei Antrieben sind die Risley-Prismen 2 unabhängig voneinander verdrehbar.

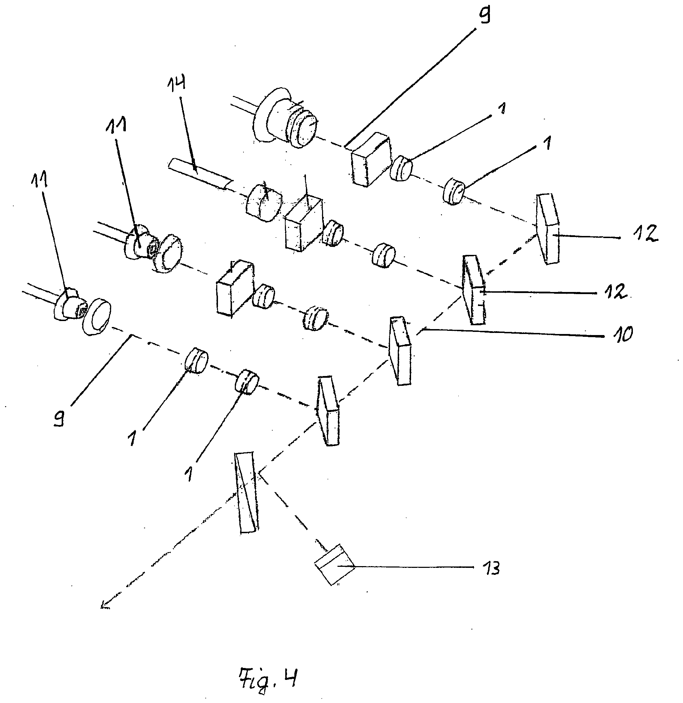

Figur 4 zeigt die erfindungsgemäße Strahlvereinigungsvorrichtung, welche mehrere Eingangsstrahlwege 9 und einen gemeinsamen Ausgangsstrahlweg 10 aufweist. In den Eingangsstrahlwegen 9 sind jeweils zwei Risley-Prismenpaare 1 angeordnet, sowie ein Umlenkspiegel 12, welcher den jeweiligen Eingangsstrahlweg 9 auf den Ausgangsstrahlweg 10 abbildet. Im Ausgangsstrahlweg 10, nach dem Umlenkspiegel 12, befindet sich ein Strahlteiler, welcher einen Teil des Lichtes des Ausgangsstrahlweges 10 auf ein Messsystem 13 mit einer Kamera abbildet. Auf der Eingangsseite der Strahlvereinigungsvorrichtung sind Laserdioden 11 und eine optische Faser 14 als Strahlquellen angeordnet. Die Strahlquellen weisen Kollimatoren auf, sowie wahlweise zusätzliche Vorsätze, wie z.B. Blenden oder Filter.

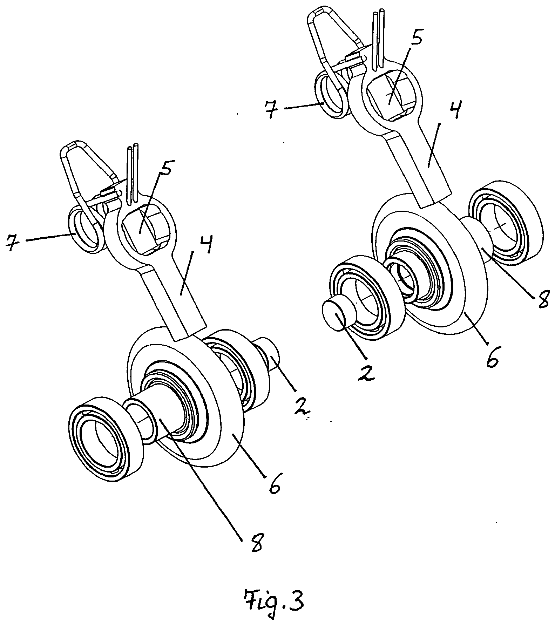

Die Ablenkvorrichtung gemäß den Figuren 1 bis 3 funktioniert so, dass das piezo-elektrische Element 5 mit Wechselspannung einer bestimmten Frequenz angeregt wird. Durch die hochfrequente Wechselspannung vollzieht das piezo-elektrische Element 5 eine Vibrationsbewegung und gibt diese an den mechanischen Resonator 4 weiter. Durch die leicht geneigte Anordnung des piezo-elektrischen Elementes 5 innerhalb der Aussparung des Resonators 4 vollzieht die Resonatorspitze eine elliptische Bewegung. Dadurch, dass der Resonator 4 an dem Reibrad 6 anliegt, wird das Reibrad 6 bei jeder Vibrationsschwingung des Resonators 4 um einen gewissen Winkel rotiert. Das Federelement 7, welches als Schenkelfeder ausgebildet ist, drückt den Resonator 4 mit einer im Wesentlichen konstanten Kraft gegen das Reibrad 6, so dass dieses bei Nichtbetrieb des Antriebs in seiner Stellung fixiert wird. Bei jeder Bewegung des Reibrades 6 wird gleichzeitig das im Bereich der zentralen Durchgangsbohrung des Reibrades 6 befindliche Prisma 2 mitbewegt. Wie in der Explosionsdarstellung der Figur 3 zu sehen, werden zwei separate, voneinander unabhängige Ablenkvorrichtungen über die gemeinsame Drehachse 3 der Prismen 2 bzw. der Reibräder 6 miteinander verbunden. Somit besitzen die beiden Prismen 2 eine gemeinsame optische Achse, können jedoch jeweils separat über ihr zugeordnetes Reibrad 6 und den zugeordneten Resonator 4 rotiert werden.

Die Strahlvereinigungsvorrichtung gemäß der Figur 4 funktioniert so, dass die Dioden 11 und die optische Faser 14 vor den Eingangsstrahlwegen 9 angeordnet werden. Die Eingangsstrahlwege 9 werden im Wesentlichen durch die optischen Achsen gebildet, welche die Risley-Prismenpaare 1 und den Umlenkspiegel 12 miteinander verbinden. Zur Aufweitung der Strahlungsquerschnitte der Dioden 11 und der optischen Faser 14 werden Kollimatoren vor den Ausgang der Strahlungsquellen 11, 14 gesetzt. Für den Fall, dass die Strahlung einer Quelle 11, 14 noch gefiltert oder im Durchmesser begrenzt werden soll, werden Filter oder Blenden als Vorsatz zwischen Strahlungsquelle 11, 14 und Risley-Prismenpaar 1 an den Anfang des Eingangsstrahlweges 9 gesetzt. Die so vorgeformten Eingangsstrahlen gelangen in den ihnen jeweils zugeordneten Eingangsstrahlweg 9, wo sie auf das erste Risley-Prismenpaar 1 treffen. Die Risley-Prismen 2 des Risley-Prismenpaares 1 werden mit Hilfe der in den Figuren 1 bis 3 dargestellten Ablenkvorrichtung entsprechend der Rotationsstellung des Reibrades 6 rotiert. Dadurch werden die Eingangsstrahlen abgelenkt und treffen auf das zweite Risley-Prismenpaar 1. Durch das zweite Risley-Prismenpaar 1 erfahren die Lichtstrahlen wiederum eine Ablenkung. Danach trifft die so manipulierte Strahlung der Eingangsstrahlwege 9 auf den Umlenkspiegel 12, durch welchen sie in den Ausgangstrahlweg 10 umgelenkt werden. Der Umlenkspiegel 12 ist hier ein 90°-Umlenkspiegel. Entlang des Ausgangsstrahlwegs 10 werden die Strahlungsanteile der einzelnen Eingangsstrahlwege 9 mit weiteren 90°-Umlenkspiegeln 12 in den Ausgangsstrahlweg 10 eingekoppelt. Anschließend gelangt die gesamte in dem Ausgangsstrahlweg 10 vorhandene Strahlung als Ausgangsstrahl auf einen Strahlteiler. Dieser reflektiert einen geringen Teil des Ausgangsstrahls auf die Kamera des Messsystems 13 und transmittiert den Reststrahl in Richtung eines Empfängers, z.B. einer optischen Faser. Der Teilstrahl, welcher auf die Kamera abgebildet wird, erzeugt dort eine positionsabhängige Intensität, welche Rückschlüsse auf die Qualität der Strahlvereinigung zulässt. Ergibt sich nun eine Differenz zwischen der Soll-Strahlüberlagerung und der gemessenen Ist-Strahlüberlagerung, werden die Risley-Prismen 2 der Risley-Prismenpaare 1 erneut verstellt, bis die gewünschte Soll-Strahlüberlagerung von dem Messsystem 13 gemessen wird. Hierzu dient eine (nicht dargestellte) Regelungseinheit, die die Signale des Messsystems 13 verarbeitet und mittels eines geeigneten Algorithmus die Antriebe der Risley-Prismenpaare 1 ansteuert.

## Patentansprüche

1. Strahlvereinigungsvorrichtung mit mehreren separaten Eingangsstrahlwegen (9) und wenigstens einem Ausgangsstrahlweg (10), zur Vereinigung mehrerer Eingangsstrahlen zu wenigstens einem Ausgangsstrahl, wobei jeder Eingangsstrahlweg (9) ein oder mehrere Risley-Prismenpaare (1) umfasst, welche den Eingangsstrahl in eine einstellbare Richtung ablenken und jeweils zwei im Lichtstrahlverlauf hintereinander angeordnete Prismen (2) umfassen, wobei wenigstens eines der beiden Prismen (2) um eine Drehachse (3) drehbar gelagert ist,
**dadurch gekennzeichnet, dass**
- im Ausgangsstrahlweg (10) ein Strahllagenmesssystem (13) oder ein Leistungsmesssystem, das die Lichtleistung des Ausgangsstrahls misst, angeordnet ist,
- die Orientierung der Risley-Prismenpaare (1) abhängig von der mittels des Strahllagenmesssystems (13) gemessenen Strahlüberlagerung oder abhängig von der mittels des Leistungsmesssystems gemessenen Lichtleistung steuerbar ist, und
- die Vorrichtung einen elektromotorischen Antrieb umfasst, der eine Drehbewegung des wenigstens einen Prismas (2) bewirkt, wobei der elektromotorische Antrieb ein piezo-elektrischer Vibrationsantrieb ist, der einen mechanischen Resonator (4) und ein daran gekoppeltes piezo-elektrisches Element (5) aufweist, wobei der Resonator (4) an einem mit dem wenigstens einen drehbar gelagerten Prisma (2) drehfest verbundenen Reibrad (6) anliegt.

2. Strahlvereinigungsvorrichtung nach Anspruch 1, **dadurch gekennzeichnet, dass** die von den Risley-Prismenpaaren (1) abgelenkten Eingangsstrahlen mittels zusätzlicher, verstellbarer oder nicht verstellbarer Umlenkeinrichtungen (12), insbesondere Umlenkspiegeln, auf den Ausgangsstrahlweg (10) richtbar sind.

3. Strahlvereinigungsvorrichtung nach Anspruch 1 oder 2, **dadurch gekennzeichnet, dass** die Risley-Prismenpaare (1) der Eingangsstrahlwege (9) voneinander unabhängig bewegbar sind.

4. Strahlvereinigungsvorrichtung nach einem der Ansprüche 1 bis 3, **dadurch gekennzeichnet, dass** die Eingangsstrahlen mit Hilfe von optischen Fasern (14) in die Eingangsstrahlwege (9) einkoppelbar sind.

5. Strahlvereinigungsvorrichtung nach einem der Ansprüche 1 bis 4, **dadurch gekennzeichnet, dass** der in dem Ausgangsstrahlweg (10) propagierende Ausgangsstrahl in eine optische Faser einkoppelbar ist.

6. Strahlvereinigungsvorrichtung nach einem der Ansprüche 1 bis 5, **dadurch gekennzeichnet, dass** sie in einem Gehäuse angeordnet ist, welches eingangsseitig Faserstecker für die Kopplung von optischen Fasern (14) mit den Eingangsstrahlwegen (9) und ausgangsseitig einen oder mehrere Faserstecker für die Kopplung des Ausgangsstrahlweges (10) mit einer oder mehreren optischen Fasern aufweist.

7. Strahlvereinigungsvorrichtung nach einem der Ansprüche 1 bis 6, **dadurch gekennzeichnet, dass** der Resonator (4) eine Schwingung des iezoelektrischen Elements (5) verstärkt und in eine wenigstens zweidimensionale oszillatorische Bewegung des Anlagebereichs des Resonators (4) an dem Reibrad (6) umwandelt.

8. Strahlvereinigungsvorrichtung nach Anspruch 7, **dadurch gekennzeichnet, dass** der Resonator (4) wenigstens zwei verschiedene Resonanzfrequenzen hat, wobei die Drehrichtung der Drehbewegung davon abhängt, bei welcher der wenigstens zwei verschiedenen Resonanzfrequenzen der Resonator (4) angeregt wird.

9. Strahlvereinigungsvorrichtung nach einem der Ansprüche 1 bis 8, **gekennzeichnet durch** ein mit dem Resonator (4) verbundenes Federelement (7), das den Resonator (4) gegen das Reibrad (6) presst.

10. Strahlvereinigungsvorrichtung nach Anspruch 9, **dadurch gekennzeichnet, dass** das Federelement (7) eine den Resonator (4) gleichzeitig halternde Schenkelfeder ist.

11. Strahlvereinigungsvorrichtung nach einem der Ansprüche 1 bis 10, **dadurch gekennzeichnet, dass** das Reibrad (6) mittels eines Wälzlagers drehbar gelagert ist, wobei das wenigstens eine Prisma (2) im Bereich einer zentralen Durchgangsbohrung des Reibrades (6) gehaltert ist.

12. Strahlvereinigungsvorrichtung nach einem der Ansprüche 1 bis 11, **dadurch gekennzeichnet, dass** beide Prismen (2) jedes der Risley-Prismenpaare (1) um eine gemeinsame Drehachse (3) drehbar gelagert sind, wobei jedes der beiden Prismen (2) mit einem Reibrad (6) drehfest verbunden ist und wobei jedem der beiden Prismen (2) ein piezo-elektrischer Vibrationsantrieb, jeweils mit einem an dem Reibrad (6) anliegenden mechanischen Resonator (4) und einem an den Resonator (4) gekoppelten piezo-elektrischen Element (5), zugeordnet ist, so dass die beiden Prismen (2) unabhängig voneinander drehbar sind.

## Claims

1. Beam combining apparatus having a plurality of separate input beam paths (9) and at least one output beam path (10) for combining a plurality of input beams to form at least one output beam, wherein each input beam path (9) comprises one or more Risley prism pairs (1) that deflect the input beam into a settable direction and in each case comprise two prisms (2) arranged one behind the other in the light beam pathway, wherein at least one of the two prisms (2) is mounted rotatably about a rotation axis (3), **characterized in that**
- a beam position measurement system (13) or an output measurement system that measures the light output of the output beam is arranged in the output beam path (10),
- the orientation of the Risley prism pairs (1) is controllable in dependence on the beam superposition measured using the beam position measurement system (13) or in dependence on the light output measured by the light output system, and
- the apparatus comprises an electric motor drive that effects a rotational movement of the at least one prism (2), wherein the electric motor drive is a piezoelectric vibration drive, which has a mechanical resonator (4) and a piezoelectric element (5) coupled thereto, wherein the resonator (4) bears against a friction wheel (6) that is connected with the at least one rotatably mounted prism (2) for rotation therewith.

2. Beam combining apparatus according to Claim 1, **characterized in that** the input beams deflected by the Risley prism pairs (1) are able to be directed onto the output beam path (10) using additional, adjustable or non-adjustable deflecting devices (12), in particular deflecting mirrors.

3. Beam combining apparatus according to Claim 1 or 2, **characterized in that** the Risley prism pairs (1) of the input beam paths (9) are movable independently of one another.

4. Beam combining apparatus according to one of Claims 1 to 3, **characterized in that** the input beams are able to be coupled into the input beam paths (9) using optical fibres (14).

5. Beam combining apparatus according to one of Claims 1 to 4, **characterized in that** the output beam that propagates within the output beam path (10) is able to be coupled into an optical fibre.

6. Beam combining apparatus according to one of Claims 1 to 5, **characterized in that** it is arranged in a housing that has, on the input side, fibre plugs for coupling optical fibres (14) to the input beam paths (9) and, on the output side, one or more fibre plugs for coupling the output beam path (10) to one or more optical fibres.

7. Beam combining apparatus according to one of Claims 1 to 6, **characterized in that** the resonator (4) amplifies an oscillation of the piezoelectric element (5) and converts it into an at least two-dimensional oscillatory motion of the region in which the resonator (4) bears against the friction wheel (6).

8. Beam combining apparatus according to Claim 7, **characterized in that** the resonator (4) has at least two different resonant frequencies, wherein the rotational direction of the rotational movement depends on which of the at least two different resonant frequencies of the resonator (4) is excited.

9. Beam combining apparatus according to one of Claims 1 to 8, **characterized by** a spring element (7) that is connected to the resonator (4) and forces the resonator (4) against the friction wheel (6).

10. Beam combining apparatus according to Claim 9, **characterized in that** the spring element (7) is a leg spring that simultaneously retains the resonator (4).

11. Beam combining apparatus according to one of Claims 1 to 10, **characterized in that** the friction wheel (6) is mounted rotatably using a rolling bearing, wherein the at least one prism (2) is retained in the region of a central through-hole in the friction wheel (6) .

12. Beam combining apparatus according to one of Claims 1 to 11, **characterized in that** the two prisms (2) of each of the Risley prism pairs (1) are mounted rotatably about a common rotation axis (3), wherein each of the two prisms (2) is connected to a friction wheel (6) for rotation therewith and wherein each of the two prisms (2) has associated with it a piezoelectric vibration drive, in each case having a mechanical resonator (4) that bears against the friction wheel (6) and a piezoelectric element (5) that is coupled to the resonator (4), such that the two prisms (2) are rotatable independently of one another.

## Revendications

1. Dispositif de concentration de faisceaux avec plusieurs trajectoires de faisceaux d'entrée (9) séparées et au moins une trajectoire de faisceau de sortie (10) pour la concentration de plusieurs faisceaux d'entrée en au moins un faisceau de sortie, dans lequel chaque trajectoire de faisceau d'entrée (9) comprend une ou plusieurs paires de prismes de Risley (1) qui dévient le faisceau d'entrée dans une direction réglable et comprennent respectivement deux prismes (2) disposés l'un derrière l'autre dans la trajectoire de faisceau lumineux, dans lequel au moins l'un des deux prismes (2) est monté de façon rotative autour d'un axe de rotation (3),
**caractérisé en ce**
- **que**, dans la trajectoire de faisceau de sortie (10), un système de mesure de positions de faisceaux (13) ou un système de mesure de puissance, lequel mesure la puissance lumineuse du faisceau de sortie, est disposé,
- l'orientation de la paire de prismes de Risley (1) peut être commandée en fonction de la superposition de faisceaux mesurée au moyen du système de mesure de positions de faisceaux (13) ou en fonction de la puissance lumineuse mesurée au moyen du système de mesure de puissance, et
- le dispositif comprend un entraînement entraîné par moteur électrique, lequel produit un mouvement de rotation de l'au moins un prisme (2), dans lequel l'entraînement par moteur électrique est un entraînement piézoélectrique par vibrations qui présente un résonateur mécanique (4) et un élément piézoélectrique (5) couplé à celui-ci, dans lequel le résonateur (4) vient en appui contre une roue de friction (6) reliée en solidarité de rotation à l'au moins un prisme (2) monté de façon rotative.

2. Dispositif de concentration de faisceaux selon la revendication 1, **caractérisé en ce que** les faisceaux d'entrée déviés par les paires de prismes de Risley (1) peuvent être dirigés au moyen de dispositifs de déviation (12) supplémentaires réglables ou non réglables, en particulier de miroirs de déviation, sur la trajectoire de faisceau de sortie (10).

3. Dispositif de concentration de faisceaux selon la revendication 1 ou 2, **caractérisé en ce que** les paires de prismes de Risley (1) des trajectoires de faisceaux d'entrée (9) peuvent être déplacées indépendamment les unes des autres.

4. Dispositif de concentration de faisceaux selon l'une des revendications 1 à 3, **caractérisé en ce que** les faisceaux d'entrée peuvent être injectés à l'aide de fibres optiques (14) dans les trajectoires de faisceaux d'entrée (9).

5. Dispositif de concentration de faisceaux selon l'une des revendications 1 à 4, **caractérisé en ce que** le faisceau de sortie se propageant dans la trajectoire de faisceau de sortie (10) peut être injecté dans une fibre optique.

6. Dispositif de concentration de faisceaux selon l'une des revendications 1 à 5, **caractérisé en ce qu'**il est disposé dans un boîtier qui présente, du côté d'entrée, des connecteurs fibre optique pour le couplage de fibres optiques (14) avec les trajectoires de faisceaux d'entrée (9) et du côté de sortie, un ou plusieurs connecteurs fibre optique pour le couplage de la trajectoire de faisceau de sortie (10) avec une ou plusieurs fibres optiques.

7. Dispositif de concentration de faisceaux selon l'une des revendications 1 à 6, **caractérisé en ce que** le résonateur (4) amplifie une oscillation de l'élément piézoélectrique (5) et la convertie en un mouvement d'oscillation au moins bidimensionnel de la zone d'appui du résonateur (4) contre la roue de friction (6).

8. Dispositif de concentration de faisceaux selon la revendication 7, **caractérisé en ce que** le résonateur (4) a au moins deux fréquences de résonance différentes, dans lequel le sens de rotation du mouvement de rotation dépend de celle des au moins deux fréquences de résonance différentes avec laquelle le résonateur (4) est excité.

9. Dispositif de concentration de faisceaux selon l'une des revendications 1 à 8, **caractérisé par** un élément de ressort (7) relié au résonateur (4), lequel presse le résonateur (4) contre la roue de friction (6).

10. Dispositif de concentration de faisceaux selon la revendication 9, **caractérisé en ce que** l'élément de ressort (7) est un ressort à branches fixant simultanément le résonateur (4).

11. Dispositif de concentration de faisceaux selon l'une des revendications 1 à 10, **caractérisé en ce que** la roue de friction (6) est montée de façon rotative au moyen d'un palier à roulement, dans lequel l'au moins un prisme (2) est fixé dans la zone d'un trou traversant central de la roue de friction (6).

12. Dispositif de concentration de faisceaux selon l'une des revendications 1 à 11, **caractérisé en ce que** les deux prismes (2) de chacune des paires de prismes de Risley (1) sont montés de façon rotative autour d'un axe de rotation (3) commun, dans lequel chacun des deux prismes (2) est relié en solidarité de rotation à la roue de friction (6) et dans lequel on associe à chacun des deux prismes (2) un entraînement piézoélectrique par vibrations, avec respectivement un résonateur mécanique (4) en appui contre la roue de friction (6) et un élément piézoélectrique (5) couplé au résonateur (4), de sorte que les deux prismes (2) peuvent tourner indépendamment l'un de l'autre.
